# EUROPEAN PATENT SPECIFICATION

(11) **EP 1 028 614 B1**
(45) Date of publication and mention of the grant of the patent: **03.04.2002**
(21) Application number: 98952761.9
(22) Date of filing: 30.10.1998
(51) Int. Cl.: A01F 15/07, B65B 11/04

(54) **PROCEDURE AND APPARATUS FOR HANDLING A FODDER BALE**
VERFAHREN UND VORRICHTUNG FÜR DIE FUTTERBALLENBEHANDLUNG
PROCEDE ET APPAREIL DE MANIPULATION D'UNE BALLE DE FOURRAGE

(30) Priority: 04.11.1997 FI 974137
(43) Date of publication of application: 23.08.2000
(73) Proprietor: NHK-KESKUS OY, 13110 Hämeenlinna (FI)
(72) Inventor: KORHONEN, Onni, FIN-00760 Helsinki (FI)
(74) Representative: Zipse + Habersack
(86) International application number: FI9800845
(87) International publication number: WO9922583

(56) References cited:
- WO-A1-95/34196
- US-A- 4 343 132

## Description

The present invention relates to a procedure as defined in the preamble of claim 1 and to an apparatus as defined in the preamble of claim 3 for the treatment of a green fodder bale.

In prior art, e.g. a wrapping apparatus is known which is provided with wheels and designed to be hitched to the rear of a tractor. The apparatus has picking devices for picking up bales from the ground, a wrapping table on which the bale is rotated, a wrapping arm or a special wrapping frame especially for rectangular bales, rotating around the bale and provided with a plastic roll. a plastic holder and a plastic cutter. Large rectangular bales have been found to have e.g. the advantage that their angular shape allows them to be packed in a small space for transportation and storage. However, they have the drawback that rectangular bales cannot be wrapped with plastic foil using small and cheap machines, but instead it is necessary to use large apparatus whose weight imposes a heavy load on the soil and which are too expensive for many farmers to buy. Therefore, rectangular bales have been wrapped using wrapping machines composed of smaller wrapping devices designed for e.g. for the wrapping of round bales with plastic. Such attempts result in low-quality and inefficient wrapping. Moreover, the amount of plastic needed in relation to the amount of fodder thus stored is about 30% larger than in the case of round bales.

The object of the present invention is to eliminate the drawbacks described above and to achieve a reliable and easy-to-use method and apparatus for the wrapping of bales, especially rectangular bales. The procedure of the invention is characterised by what is presented in the characterisation part of claim 1, and the apparatus of the invention is characterised by what is presented in the characterisation part of claim 3. Other embodiments of the invention are characterised by what is presented in the other claims.

The solution of the invention has the advantage that the same wrapping device can be used to effectively wrap both round bales and rectangular bales while ensuring a very high fodder quality with a minimum plastic consumption. A further advantage is that other bale treatment operations in addition to the wrapping, e.g. loading, can be performed using the same apparatus. The wrapping of the bales can also be very flexibly carried out either in the place of storage, from a transport carriage or when the bales are being loaded onto a transport carriage on a field. A further advantage is efficiency - the apparatus has a capacity sufficient to allow it to be used in a high-efficiency baler chain. Additional advantages are simplicity and low price of the apparatus, so it is suited for use on smaller farms as well.

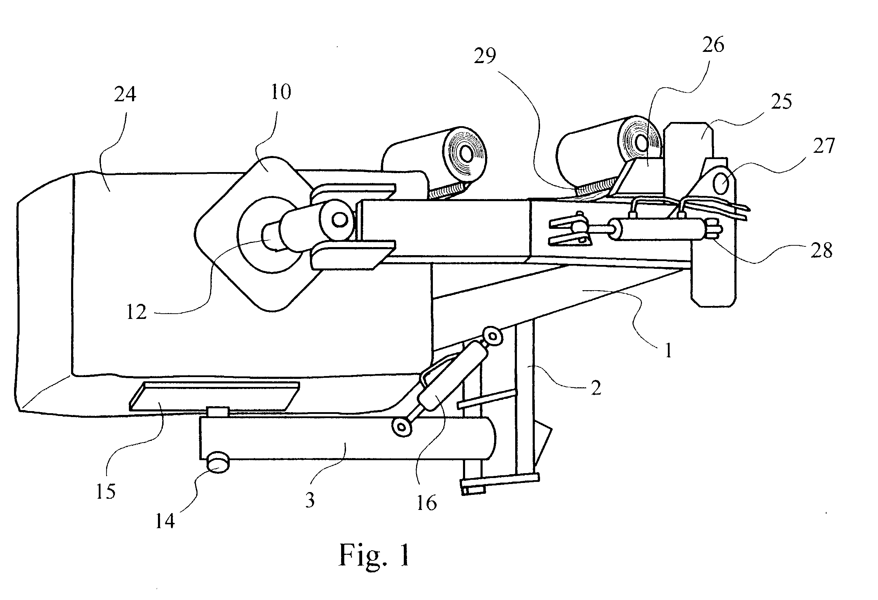

In the following, the invention will be described in detail by the aid of an example by referring to the attached drawings, wherein
- Fig. 1: presents a plastic-wrapping apparatus in an oblique rear view,
- Fig. 2: presents the same plastic-wrapping apparatus at the beginning of a wrapping operation, seen in top view, and
- Fig. 3: presents the same plastic-wrapping apparatus at another stage of a wrapping operation, seen in top view.

The apparatus of the invention will be described first to make it easier to understand the procedure. The bale treatment apparatus of the invention, hereinafter referred to as apparatus', is driven e.g. by a tractor, to whose rear part it is hitched. The apparatus comprises a frame part consisting of at least a vertical support 2 and a supporting beam 1 disposed symmetrically above the frame part 2 and perpendicularly to it, i.e. in a substantially horizontal position. At each end of the supporting beam there is a working arm 4 pivotally connected to the beam by its first end and acting as a loading and wrapping arm, which turns laterally about joint 28 and vertically about joint 27. In addition, the length of the working arm, i.e. the distance of its second end from its first end is adjustable, allowing the same apparatus to be used to handle bales of different sizes. The movements of the working arm are implemented using power means of which the figures show a hydraulic cylinder 9 producing the lateral motion. Mounted at the other end of each working arm is a bale holding and rotating mechanism. which consists of a hydraulic motor acting as a rotation means 11, a rotating shaft 12 and a squeeze plate 10 attached to the shaft 12. The squeeze plates on the two working arms face toward each other so that, by turning the working arms 4 toward each other, a bale can be gripped between the squeeze plates 10 in order to move it, wrap it with plastic or load it onto a vehicle. Placed in the vicinity of the squeeze plates is at least one mechanical detector serving to centralise the squeeze plates with respect to the bale. Moreover, the squeeze plate is connected to its rotating shaft via a ball joint to permit adaptation to a possible wobbling motion of the bale.

Connected in a horizontally turnable fashion by its first end to the lower part of the vertical support is a low supporting arm 3, whose other end carries a hydraulic motor 14 and a rotating plate 15 attached to it by a shaft and designed to support the bale from below when the bale is being turned in a horizontal plane between different stages of a wrapping operation, During wrapping, the low supporting arm is held in a lateral position to keep it out of the way when the bale is being rotated in a vertical plane. The turning movement of the low supporting arm is implemented using a hydraulic cylinder 16,

Placed above the supporting beam 1 and parallel to it are two guide bars 5 and 6, of which the upper guide bar 5 is attached by its ends to end plates 25 while the lower guide bar 6, which may disposed in a position somewhat closer to the bale, is attached by its ends to end plates 26. Slidably mounted on each guide bar is a roll carriage 29 with bearings supporting a wrapping foil roll 7, 8 in a position parallel to the guide bars 5 , 6. The roll carriages are designed to be movable on the guide bars from end to end of the bar, the movement being controlled by a logic control system. The roll carriage movement is produced by a chain connected to each roll carriage and driven by a hydraulic motor. The range of movement of the roll carriages extends so far out that the horizontal distance between the outer ends of the plastic rolls at the beginning of a wrapping operation is larger than the corresponding width of the fodder bale 24 between the squeeze plates 10 of the working arms This arrangement allows a portion of the plastic foil to be bent over the inner corners 22, 23 of the bale at the beginning of the wrapping operation so that no part at the corners of the bale is left uncovered with plastic.

In addition, mounted in the immediate vicinity of each squeeze plate 10 is a holder and locking device 19a, 19b for the free end of the plastic foil, as well as a cutting device. After the bale has been wrapped with plastic foil, the free end of the plastic foil of each roll will remain secured in the holder, ready for the next wrapping operation. Moreover, as seen from above, the plastic foils are arranged in a crosswise manner so that the free end of the plastic foil of the left-hand plastic roll 7 is held by the right-hand holder 19a while the free end of the plastic foil of the right-hand plastic roll 8 is held by the left-hand holder 19b.

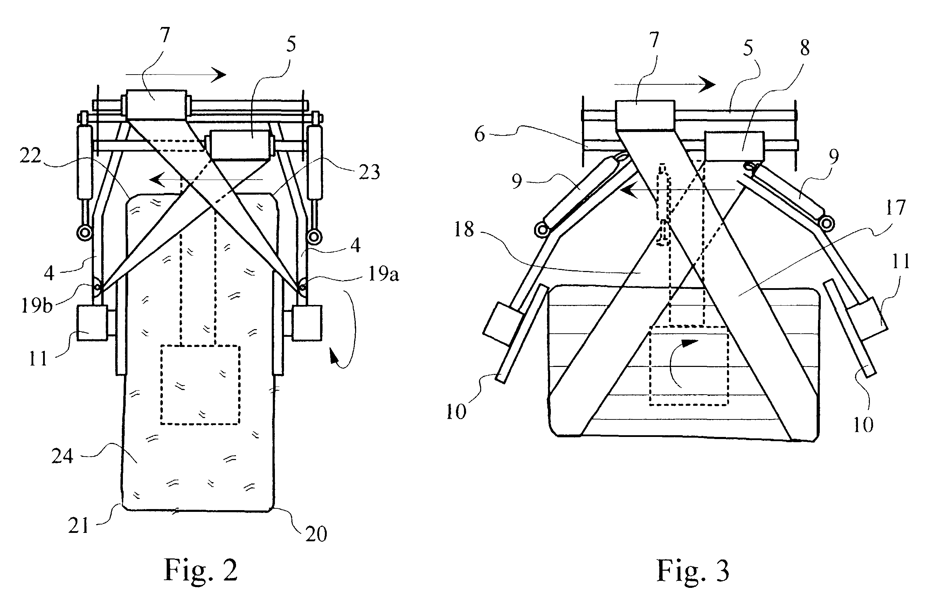

Bale treatment by the method of the invention is as follows: The situation presented in Fig. 2 may be regarded as representing the start of a working cycle. The bale 24. held between the squeeze plates 10 of the working arms 4, has been taken up from a field, storage or other suitable place. To save plastic, the bale is gripped by its longer sides and the length of the working arms has been adjusted according to the bale length so that the squeeze plates grip the bale at about the centre of the bale side. Before starting the wrapping process the plastic rolls 7, 8 are driven by the logic control system into a crosswise position as illustrated by Fig. 2. In this situation, the distance between the outer ends of the plastic rolls is greater than the corresponding width dimension of the bale. This ensures that the plastic foil is bent over the inner corners 22, 23 of the bale at the start, thus effectively protecting the bale. The free ends of the plastic foils are held in their holders 19a, 19b. The free end of the plastic foil of the left-hand plastic roll 7 is held by the right-hand holder 19a while the free end of the plastic foil of the right-hand plastic roll 8 is held by the left-hand holder 19b. Before the wrapping operation is started, the low supporting arm must be turned aside to make way for the bale.

The wrapping process is started by rotating the bale in a vertical plane by means of the rotation means 11. The crosswise plastic foils 17, 18 at first go over the inner corners 22, 23 of the bale and are partially bent onto the long sides of the bale From this point, the process can be continued in two different ways. In a first alternative, when the bale has been rotated through a first half-revolution, the plastic rolls are quickly moved crosswise again, the bale is rotated again through half a revolution and the originally outer corners 20, 21 are wrapped. After this, the bale is rotated continuously in a vertical plane while the plastic rolls are slowly driven toward each other, the bale being thus completely wrapped longitudinally until the plastic rolls have reached the midpoint of their range of movement.

In an alternative solution, after the inner corners have been wrapped, the plastic rolls are immediately driven slowly against each other and the rolls are moved, without rotating the bale, from their mid-position to the extremities of their range of movement, and finally the originally outer corners 20, 21 are wrapped.

At this point of the wrapping operation, regardless of which one of the alternative methods has been used so far, the second phase is started. The low supporting arm 3 is driven into position under the bale, the working arms 4 are released from the bale by turning them outward farther apart and the bale is rotated horizontally through 90º by means of the rotating mechanism 14. The plastic foils 17, 18 now cross each other again and are bent over the corners 20 and 23. The bale is pressed by its ends between the squeeze plates 10 and lifted off the rotating plate 15, whereupon the low supporting arm 3 is turned aside. Next, the wrapping operation is finished by rotating the bale transversely between the squeeze plates 10 and moving the plastic rolls on their guide bars either from the middle towards the ends or from the ends towards the middle.

At the final stage of the wrapping operation, the plastic rolls are again moved to the ends of their guide bars, whereupon the free ends of the plastic foils fall into the holders 19a, 19b mounted near the other ends of the working arms 4 and are locked in the holders. After this the portion of the plastic foil between the bale and the holder is cut off, leaving the free end of each plastic foil locked in the holder, whereupon the bale can be dropped down from between the squeeze plates.

It is obvious to the person skilled in the art that the invention is not restricted to the example described above but that it may be varied within the scope of the claims presented below. Thus, for example, according to a preferred embodiment, the apparatus may be so constructed that the bale itself is not rotated but instead the plastic rolls 7, 8 together with the guide bars 5, 6 and roll carriages 29 are driven in an orbit around the bale. In this case the squeeze plates 10 are only used to keep the bale raised during the wrapping operation. Correspondingly, connected to each working arm are a rotating mechanism and an L-shaped rotating arm with a roll carriage 29 and a plastic roll mounted in its portion parallel to the axis of rotation. The portions parallel to the axis of rotation of the rotating arms are placed oppositely to each other and so dimensioned and synchronised with respect to each other that the roll will not touch each other. The rotating mechanisms may be so constructed that the path of the plastic rolls around the bale is not necessarily a perfect circle but rather an adapted 'quadrangular orbit. In this case, the apparatus is provided with a separate chain-operated track attached to the working arms and placed laterally relative to the bale. said track being of a rectangular shape as seen from the side, approximately conforming to the dimensions of the bale. The roll carriage travels around the bale along this chain track, remaining at substantially the same distance from the bale all the time.

The actual wrapping function is in principle the same as that described above in conjunction with the apparatus according to a second embodiment.

This solution has the advantage that the apparatus can be used to wrap bales of different shapes, including shapes other than rectangular.

Instead of using logic control, the control of the wrapping operation can be implemented using e.g. a microprocessor or equivalent.

## Claims

1. Procedure for wrapping a bale of hay or straw, such as a straw fodder bale, with plastic foil, in which procedure the wrapping apparatus is hitched to a tractor or equivalent, said wrapping apparatus comprising plastic rolls (7, 8) provided with plastic foil, **characterised in that** the operation of wrapping the bale comprises at least the following steps:
- at the beginning of the wrapping operation, the bale is taken up into the wrapping apparatus by gripping the bale by its sides by means of a gripping mechanism (4, 10) and lifting the bale from its base
- the plastic foils (17, 18) coming from the two plastic rolls (7, 8) are caused to run in a crosswise manner relative to each other and passed further around the bale (24)
- the two plastic rolls (7, 8) are driven towards each other and the bale is wrapped in a vertical plane between the working arms (4) until the bale is entirely covered with plastic
- the bale is removed from the wrapping apparatus by means of the working arms (4).

2. Procedure as defined in claim 1 for wrapping a bale of hay or straw, such as a straw fodder bale, with plastic foil, in which procedure the wrapping apparatus is hitched to a tractor or equivalent, said wrapping apparatus comprising a component supporting and rotating the bale (24) as well as plastic rolls (7, 8) provided with plastic foil, **characterised in that** the operation of wrapping the bale comprises at least the following steps:
- at the beginning of the wrapping operation, the bale is taken up into the wrapping apparatus by gripping the bale by its sides by means of a gripping mechanism (4, 10) and lifting the bale from its base
- the plastic foils (17, 18) coming from the two plastic rolls (7, 8) are caused to run in a crosswise manner relative to each other and the bale (24) is rotated
- the two plastic rolls (7, 8) are driven towards each other and the bale is rotated in a vertical plane between the working arms (4) until the bale is entirely covered with plastic
- the bale is removed from the wrapping apparatus by means of the working arms (4).

3. Procedure as defined in claim 2 for wrapping a straw fodder bale with plastic foil, **characterised in that** the bale is taken up into the wrapping apparatus by means of working arms (4) by pressing the bale by its long sides between squeeze plates (10) provided at the ends of the working arms and lifting the bale from its base, and that the bale is wrapped between the working arms by rotating the bale by means of the squeeze plates (10) and a rotation means (11), and that, if necessary, the bale is turned through 90° from below by means of a low supporting arm before the final stage of the wrapping operation.

4. Apparatus for wrapping a bale of hay or straw, such as a straw fodder bale, with plastic foil, said apparatus comprising a wrapping apparatus hitched to a tractor or equivalent, said apparatus comprising a frame part (1,2) comprising elements needed for lifting the bale and wrapping it with plastic foil, **characterised in that** the apparatus comprises at least two working arms (4) hinged by their first ends on the upper part of the frame part in a manner allowing the working arms to be turned towards each other, the second ends of said working arms being provided with squeeze plates (10) for holding the bale, and that the frame part is further provided with plastic rolls (7, 8) which can be driven in opposite directions relative to each other and which are caused to move in opposite directions so that the plastic foils proceeding from the plastic rolls and wound around the bale cross each other during the wrapping operation.

5. Apparatus as defined in claim 4 for wrapping a bale of hay or straw, such as a straw fodder bale, with plastic foil, **characterised in that** the apparatus comprises at least two working arms (4) hinged by their first ends on the upper part of the frame part in a manner allowing the working arms to be turned towards each other, the second ends of said working arms being provided with squeeze plates (10) for rotating the bale, and that the frame part is further provided with plastic rolls (7, 8) which can be driven in opposite directions relative to each other and which are caused to move in opposite directions so that the plastic foils proceeding from the plastic rolls and wound around the bale cross each other during the wrapping operation.

6. Apparatus as defined in claim 4 or 5, **characterised in that** the first end of each working arm (4) is connected to the end of a supporting beam (1) in the upper part of the frame part via a joint permitting the working arm to turn both horizontally and vertically.

7. Apparatus as defined in claim 5 or 6, **characterised in that** the wrapping apparatus comprises a low supporting arm (3) mounted in the lower part of the frame part, the other end of the low supporting arm being provided with a rotating mechanism (14, 15) for rotating the bale and supporting it from below.

## Patentansprüche

1. Verfahren zum Einwickeln eines Ballens von Heu oder Stroh, wie eines Strohfutterballens, mit Plastikfolie, in welchem Verfahren der Einwickelapparat an einen Traktor oder ähnliches angekoppelt ist, wobei der Einwickelapparat Plastikrollen (7, 8), versehen mit Plastikfolie, aufweist,
**dadurch gekennzeichnet, dass** die Vorgehensweise beim Einwickeln des Ballens mindestens folgende Schritte beinhaltet:
- am Beginn des Einwickelvorgangs wird der Ballen mittels eines Greifmechanismus (4, 10) durch Greifen an seinen Seiten in den Einwickelapparat aufgenommen und von seinem Liegeplatz angehoben,
- die Plastikfolien (17, 18), kommend von den zwei Plastikrollen (7, 8), werden dazu veranlasst, kreuzweise, relativ zueinander zu laufen und sie werden weiter um den Ballen (24) geführt,
- die zwei Plastikrollen (7, 8) werden gegeneinander geführt und der Ballen wird in einer vertikalen Ebene zwischen den Arbeitsarmen (4) umwickelt, bis der Ballen komplett mit Plastik überzogen ist,
- der Ballen wird mittels der Arbeitsarme (4) vom Einwickelapparat entfernt.

2. Verfahren nach Anspruch 1, zum Einwickeln eines Ballens von Heu oder Stroh, wie eines Strohfutterballens, mit Plastikfolie, in welchem Verfahren der Einwickelapparat an einen Traktor oder ähnliches angekoppelt ist, wobei der Einwickelapparat Komponenten zum Halten und Drehen des Ballens (24) als auch Plastikrollen (7, 8), versehen mit Plastikfolie, aufweist,
**dadurch gekennzeichnet, dass** die Vorgehensweise beim Einwickeln des Ballens mindestens folgende Schritte beinhaltet:
- am Beginn des Einwickelvorgangs wird der Ballen mittels eines Greifmechanismus (4, 10) durch Greifen an seinen Seiten in den Einwickelapparat aufgenommen und von seinem Liegeplatz angehoben,
- die Plastikfolien (17, 18), kommend von den zwei Plastikrollen (7, 8), werden dazu veranlasst, kreuzweise, relativ zueinander zu laufen und der Ballen (24) wird gedreht,
- die zwei Plastikrollen (7, 8) werden gegeneinander geführt und der Ballen wird in einer vertikalen Ebene zwischen den Arbeitsarmen (4) gedreht, bis der Ballen komplett mit Plastik überzogen ist,
- der Ballen wird mittels der Arbeitsarme (4) vom Einwickelapparat entfernt.

3. Verfahren nach Anspruch 2 zum Einwickeln eines Strohfutterballens mit Plastikfolie,
**dadurch gekennzeichnet, dass** der Ballen mittels Arbeitsarmen (4) durch Einpressen des Ballens an seinen langen Seiten zwischen Pressplatten (10), welche an den Enden der Arbeitsarme vorgesehen sind, in den Einwickelapparat aufgenommen und der Ballen von seinem Liegeplatz angehoben wird, und dass der Ballen zwischen den Arbeitsarmen durch Rotieren des Ballens mittels der Pressplatten (10) und einer Rotationseinrichtung (11) umwickelt wird, und dass, falls nötig, der Ballen von unten mittels eines unteren Stützarmes vor der Endphase des Einwickelvorgangs um 90° gedreht wird.

4. Apparat zum Einwickeln eines Ballens von Heu oder Stroh, wie eines Strohfutterballens, mit Plastikfolie, welcher Apparat einen Einwickelapparat, angekoppelt an einen Traktor oder ähnliches, umfasst, wobei dieser Apparat ein Rahmenteil (1, 2) aufweist, welches Elemente, die zum Anheben und Umwickeln des Ballens mit Plastikfolie nötig sind, umfasst,
**dadurch gekennzeichnet, dass** der Apparat mindestens zwei Arbeitsarme (4) aufweist, welche an ihren ersten Enden am oberen Teil des Rahmenteils derart angelenkt sind, dass die Arbeitsarme zueinander geschwenkt werden können, wobei die zweiten Enden dieser Arbeitsarme mit Pressplatten (10) zum Halten des Ballens ausgestattet sind, und dass das Rahmenteil weiterhin mit Plastikrollen (7, 8) versehen ist, welche gegenläufig zueinander angetrieben werden können und gegenläufig bewegt werden, so dass sich die Plastikfolien, wenn sie von den Plastikrollen abrollen und um den Ballen gewickelt werden, beim Einwickelvorgang kreuzen.

5. Apparat nach Anspruch 4 zum Einwickeln eines Ballens von Heu oder Stroh, wie eines Strohfutterballens, mit Plastikfolie,
**dadurch gekennzeichnet, dass** der Apparat mindestens zwei Arbeitsarme (4) aufweist, welche an ihren ersten Enden am oberen Teil des Rahmenteils derart angelenkt sind, dass die Arbeitsarme zueinander geschwenkt werden können, wobei die zweiten Enden dieser Arbeitsarme mit Pressplatten (10) zum Drehen der Ballen ausgestattet sind, und dass das Rahmenteil weiterhin mit Plastikrollen (7, 8) versehen ist, welche gegenläufig zueinander angetrieben werden können und gegenläufig bewegt werden, so dass sich die Plastikfolien, wenn sie von den Plastikrollen abrollen und um den Ballen gewickelt werden, beim Einwickelvorgang kreuzen.

6. Apparat nach Anspruch 4 oder 5,
**dadurch gekennzeichnet, dass** das erste Ende eines jeden Arbeitarmes (4) mit dem Ende eines Stützbalkens (1) im oberen Bereich des Rahmenteils mittels einer Verbindung, welche dem Arbeitsarm eine horizontale und eine vertikale Drehung erlaubt, verbunden ist.

7. Apparat nach Anspruch 5 oder 6,
**dadurch gekennzeichnet, dass** der Einwickelapparat einen unteren Stützarm (3), der im unteren Bereich des Rahmenteils montiert ist, aufweist, wobei das andere Ende des unteren Stützarms mit einem Rotationsmechanismus (14, 15) zum Drehen und Stützen des Ballens von unten versehen ist.

## Revendications

1. Procédé pour emballer une balle de foin ou de paille comme une balle de fourrage de blé avec une feuille de plastique dans lequel procédé le dispositif d'emballage est accroché à un tracteur ou à quelque chose d'équivalent ; ledit dispositif d'emballage comprenant des rouleaux de plastique (7, 8) pourvus d'une feuille en plastique, **caractérisé en ce que** l'opération d'emballage de la balle comprend au moins les étapes suivantes :
- au début de l'opération d'emballage, la balle est levée dans le dispositif d'emballage en étant agrippée par ses côtés au moyen d'un mécanisme d'agrippage (4, 10) et levée de sa base ;
- les feuilles de plastique (17, 18) provenant de deux rouleaux de plastique (7, 8) sont destinées de se déplacer d'une manière croisée l'une par rapport à l'autre et passées autour de la balle (24);
- les deux rouleaux de plastique (7, 8) sont conduits l'un vers l'autre et la balle est emballée dans un plan vertical entre les bras de travail (4) jusqu'à ce que la balle soit entièrement recouverte de plastique ;
- la balle est retirée du dispositif d'emballage au moyen des bras de travail (4).

2. Procédé selon la revendication 1, pour emballer une balle de foin ou de paille comme une balle de fourrage en paille avec une feuille de plastique pendant lequel procédé le dispositif d'emballage est accroché à un tracteur ou quelque chose d'équivalent ; ledit dispositif d'emballage comprenant un élément supportant et tournant la balle (24) ainsi que les rouleaux de plastique (7, 8) pourvus d'une feuille de plastique, **caractérisé en ce que** l'opération d'emballage de la balle comprend au moins les étapes suivantes :
- au début de l'opération d'emballage, la balle est levée dans l'appareil d'emballage en étant agrippée par ses côtés grâce à un mécanisme d'agrippage (4, 10) et levée de sa base ;
- les feuilles en plastique (17, 18) provenant de deux rouleaux en plastique (7, 8) sont destinées à être entraîné d'une manière croisée l'une par rapport à l'autre et la balle (24) est tournée;
- les deux rouleaux de plastique (7, 8) sont conduits l'un vers l'autre et la balle est tournée dans un plan vertical entre les bras de travail (4) jusqu'à ce que la balle soit entièrement recouverte de plastique ;
- la balle est retirée du dispositif d'emballage au moyen des bras de travail (4).

3. Procédé selon la revendication 1 pour emballer une balle de fourrage en paille avec une feuille de plastique, **caractérisé en ce que** la balle est levée dans l'appareil d'emballage grâce aux bras de travail (4) en étant pressée par ses longs côtés entre les plaques de serrage (10) pourvues à ses extrémités des bras de travail et levée de sa base et **caractérisé en ce que** la balle est emballée entre les bras de travail en étant tournée par les plaques de serrage (10) et des moyens de rotation (11) et **caractérisé en ce que**, si nécessaire, la balle est tournée à 90° du bas grâce à un bras de support inférieur avant le stade final de l'opération d'emballage.

4. Dispositif pour emballer une balle de foin ou de paille comme une balle de fourrage en paille avec une feuille de plastique, lequel dispositif comprend un dispositif d'emballage accroché à un tracteur ou à quelque chose d'équivalent, lequel dispositif comprend une partie de cadre (en forme de cadre) (1.2) comprenant des éléments nécessaires pour lever la balle et l'emballer avec une feuille de plastique, **caractérisé en ce que** le dispositif comprend au moins deux bras de travail (4) articulés par leurs premières extrémités sur la partie supérieure de la partie en forme de cadre de sorte que les bras de travail puissent être tournés l'un vers l'autre; les secondes extrémités desdits bras étant pourvues de plaques de serrage (10) destinées à tenir la balle et **caractérisé en ce que** la partie en forme de cadre est pourvue en plus de rouleaux de plastique (7, 8) qui peuvent être conduits dans des directions opposées l'un par rapport à l'autre et qui sont destinés à être déplacés dans des directions opposées de manière à ce que les feuilles de plastique provenant des rouleaux de plastique et entourées autour de la balles se croisent pendant l'opération d'emballage.

5. Dispositif selon la revendication 4 pour emballer une balle de foin ou de paille telle une balle de fourrage en paille avec une feuille de plastique, **caractérisé en ce que** le dispositif comprend au moins deux bras de travail (4) articulés par leurs premières extrémités sur la partie supérieure de la partie en forme de cadre de sorte que les bras de travail puissent être tournés l'un vers l'autre; les secondes extrémités desdits bras de travail étant pourvues de plaques de serrage (10) pour tourner les balles et **caractérisé en ce que** la partie en forme de cadre est pourvue en plus de rouleaux de plastique (7, 8) qui peuvent être conduits dans des directions opposées l'un par rapport à l'autre et qui sont destinés à être déplacés dans des directions opposées de sorte que les feuilles de plastique provenant des rouleaux de plastique et enroulées autour de la balle se croisent pendant l'opération d'emballage.

6. Dispositif selon la revendication 4 ou 5, **caractérisé en ce que** la première extrémité de chaque bras de travail (4) est connectée à l'extrémité de la poutre de support (1) dans la partie supérieure de la partie en forme de cadre par un élément de connexion qui permet au bras de travail de les faire tourner tous les deux de manière horizontale et verticale.

7. Dispositif selon la revendication 5 ou 6, **caractérisé en ce que** le dispositif d'emballage comprend un bras de support inférieur ( 3) monté dans la partie inférieure de la partie en forme de cadre ; l'autre extrémité du bras de support inférieur étant pourvu d'un mécanisme de rotation (14, 15) pour tourner la balle et la supporter par le bas.
